(19) **Europäisches Patentamt / European Patent Office / Office européen des brevets**

(11) **EP 2 554 526 A1**

(12) # EUROPEAN PATENT APPLICATION
published in accordance with Art. 153(4) EPC

(43) Date of publication:
**06.02.2013 Bulletin 2013/06**

(21) Application number: **11759561.1**

(22) Date of filing: **25.03.2011**

(51) Int Cl.:
**C04B 35/83** (2006.01)

(86) International application number:
**PCT/JP2011/057309**

(87) International publication number:
**WO 2011/118757 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 JP 2010072849**

(71) Applicant: **Toyo Tanso Co., Ltd.**
**Osaka-shi**
**Osaka 555-0011 (JP)**

(72) Inventors:
• **MACHINO, Hiroshi**
**Mitoyo-shi**
**Kagawa 769-1102 (JP)**

• **HIRAOKA, Toshiharu**
**Mitoyo-shi**
**Kagawa 769-1102 (JP)**
• **TOMITA, Yuji**
**Mitoyo-shi**
**Kagawa 769-1102 (JP)**
• **FUJIOKA, Yuji**
**Mitoyo-shi**
**Kagawa 769-1102 (JP)**

(74) Representative: **Glawe, Delfs, Moll**
**Patent- und Rechtsanwälte**
**Postfach 26 01 62**
**80058 München (DE)**

(54) **CARBON/CARBON COMPOSITE MATERIAL AND METHOD OF MANUFACTURE FOR SAME**

(57) A C/C composite material and a method of manufacturing the same are provided that can improve the thermal conductivity in a stacking direction at room temperature while at the same time improving the flexural strength and the interlaminar shear strength. A C/C composite material includes a laminated material having two or more layered materials (1) laminated on one another, each of the layered materials (1) having a felt (10) and carbon fiber unidirectional cloths (11), (12), and contains a matrix component made of a vapor-phase pyrolytic carbon inside the laminated material. The extending direction of the carbon fibers in the carbon fiber unidirectional cloth (11) is arranged to be at a right angle to the extending direction of the carbon fibers in the carbon fiber unidirectional cloth (12), and the carbon fibers of the felt (10) are disposed in the stacking direction of laminated material by needle punching.

FIG. 1

EP 2 554 526 A1

**Description**

TECHNICAL FIELD

The present invention relates to a C/C composite material and a method of manufacturing the same. More particularly, the invention relates to a C/C composite material and a method of manufacturing the same that can improve the thermal conductivity in a stacking direction at room temperature without degrading the flexural strength or the interlaminar shear strength.

BACKGROUND ART

C/C composite materials are allowed to have high strength and high toughness due to combination with carbon fiber, in addition to the corrosion resistance and heat resistance that are inherent to carbon. Another feature of the C/C composite materials is that they are lighter in weight than metal, because carbon has a small specific gravity. Because of such features, it has been studied to use a C/C composite material for various applications such as the materials for aerospace applications, for semiconductor and solar battery panel manufacturing applications, and for nuclear power applications, as well as metal heat-treatment jig applications. When used for these applications, the C/C composite material is required to have a high heat conduction capability in addition to high strength. In particular, when the material needs to support an object having a large area, it is often necessary to improve the thermal conductivity coefficient in the stacking direction of the C/C composite material.

Here, a proposal has been made in order to increase the strength and heat conduction capability of a C/C composite material. For example, the thermal conductivity coefficient is improved by impregnating pyrocarbon into a carbon felt, and the strength is improved by restricting the bulk density (see Patent Document 1 below).
In addition, another proposal of restricting the flexural strength and the Thermal conductivity coefficient in the stacking direction has been made in order to optimize the strengths characteristics and thermal conductivity coefficient of a C/C composite material, although the object is different (see Patent Document 2 below).

CITATION LIST

Patent Literature

[Patent Document 1] JP H05(1993)-306168A
[Patent Document 2] JP 2002-255664 A

SUMMARY OF INVENTION

TECHNICAL PROBLEM

However, although the technique disclosed in Patent Document 1 can improve the thermal conductivity in a direction perpendicular to the stacking direction, it is difficult to improve the thermal conductivity in the stacking direction. In addition, merely restricting the bulk density cannot enhance the strength of the C/C composite material sufficiently. Moreover, the technique disclosed in Patent Document 2 cannot improve the Thermal conductivity coefficient at a low temperature (room temperature) to a desired valve.

In view of the foregoing circumstances, it is an object of the present invention to provide a C/C composite material and a method of manufacturing the same that can improve the thermal conductivity in the stacking direction at room temperature while at the same time improving the flexural strength and the interlaminar shear strength.

SOLUTION TO PROBLEM

In order to accomplish the foregoing object, the present invention provides a C/C composite material comprising a laminated material having at least two raw materials laminated on one another, the at least two raw materials each containing carbon fiber and selected from the group consisting of a layered material using continuous fiber, a layered material using chopped fiber, a 2D fabric, and a layered material using felt, the laminated material containing therein a matrix component, the C/C composite material having, at room temperature (25°C), a flexural strength of 100 MPa or higher, and a thermal conductivity of 30 W/(m·K) or higher in a stacking direction.
The above-described configuration makes it possible to improve the thermal conductivity in the stacking direction at room temperature while at the same time improving the flexural strength.

Herein, the layered material using continuous fiber refers to, for example, a layered material formed by arranging integral-type long carbon fibers disposed in one direction to both ends of a plane direction so as to be parallel to each other. The layered material using chopped fiber refers to, for example, a layered material formed by laying short carbon fibers two-dimensionally randomly in a thin sheet form without leaving gaps, and pressing them into the layered material. The 2D fabric refers to, for example, a fabric formed by disposing tows, each having long carbon fibers disposed parallel to each other into a strip-like shape, longitudinally and transversely, and causing the tows to intersect each other so as to form them into a woven fabric form. The layered material using felt refers to, for example, a layered material formed by causing short carbon fibers to aggregate three-dimensionally randomly and pressing them at a certain level of pressure into the layered material.

In order to accomplish the foregoing object, the present invention also provides a C/C composite material comprising a laminated material having at least two raw materials laminated on one another, the at least two raw materials each containing carbon fiber and selected from the group consisting of a layered material using continuous fiber, a layered material using chopped fiber, a 2D fabric, and a layered material using felt, the laminated material containing therein a matrix component, the C/C composite material having, at room temperature, an interlaminar shear strength of 10 MPa or higher, and a thermal conductivity of 30 W/(m·K) or higher in a stacking direction.

The above-described configuration makes it possible to improve the thermal conductivity in the stacking direction at room temperature while at the same time improving the interlaminar shear strength.

It is desirable that a portion or the entirety of the matrix component comprise vapor-phase pyrolytic carbon or pitch-based carbon.

The just-described configuration makes it possible to produce a matrix easily. Thus, the flexural strength and the interlaminar shear strength can be further improved. In addition, the thermal conductivity in the stacking direction at room temperature can be further improved.

It is desirable that the carbon fibers be arranged in the stacking direction of the laminated material.

With the just-described configuration, heat conduction is effected by the carbon fibers. As a result, the Thermal conductivity in the stacking direction at room temperature can be further improved.

In order to accomplish the foregoing object, the present invention also provides a C/C composite material comprising: a laminated material comprising two or more layered materials laminated on one another, each of the layered materials containing carbon fiber and having a felt and two or more cloths each comprising continuous fiber, the laminated material containing therein a matrix component, wherein: the fibers of each of the cloths are extended in one direction within a plane perpendicular to a stacking direction; the fibers in at least one of the cloths in the layered materials are extended in a different direction from the extending direction in the other cloth(s); and a portion of the fibers of the felt pierces through the cloths in the stacking direction.

With the just-described configuration, the cloths comprising continuous fiber, which has high flexural strength and high interlaminar shear strength (hereinafter also referred to as both of the strengths) exist. Therefore, it is possible to increase both of the strengths of the C/C composite material. In addition, since a portion of the fibers of the felt, which has high thermal conductivity, penetrates the cloths in the stacking direction, the thermal conductivity in the stacking direction at room temperature can be improved in the C/C composite material. Furthermore, since the fibers of the felt penetrate the cloths in the stacking direction, each of the layers is firmly bonded together, so that both of the strengths of the C/C composite material can be further increased. In addition, since the fibers in at least one of the cloths in the layered material is extended in a direction different from that in the other cloth(s), both of the strengths of the C/C composite material can be increased in, not one direction, but a plurality of directions. Moreover, since the matrix component is contained in the laminated material, both of the strengths of the C/C composite material can be further increased.

It is desirable that the extending direction of the fibers in the one of the cloths and the extending direction of the fibers in the other cloth(s) be configured to be at right angles.

When the extending direction of the one of the fibers is configured to be at a right angle to the extending direction of the other fibers, both of the strengths of the C/C composite material can be increased in both of the directions.

It is desirable that a portion or the entirety of the matrix component comprise vapor-phase pyrolytic carbon or pitch-based carbon.

Such a configuration is desirable for the same reason as described above.

In order to accomplish the foregoing object, the present invention also provides a method of manufacturing a C/C composite material, comprising the steps of: preparing a laminated material comprising at least two raw materials laminated on one another, the at least two raw materials selected from the group consisting of a layered material using continuous fiber, a layered material using chopped fiber, a 2D fabric, and a layered material using felt; arranging carbon fibers in a stacking direction of the laminated material using needle punching; and disposing a matrix component inside the laminated material.

Such a method makes it possible to manufacture the above-described C/C composite material easily. Moreover, the use of the needle punching enables to arrange the carbon fibers in the stacking direction of the laminated material easily.

Therefore, the thermal conductivity in the stacking direction at room temperature can be improved at low cost. Furthermore, each of the layers can be firmly bonded together, so the strength of the C/C composite material is enhanced.

ADVANTAGEOUS EFFECTS OF INVENTION

The present invention achieves the significant advantageous effect of improving the thermal conductivity in the stacking direction at room temperature while at the same time improving the flexural strength and the interlaminar shear strength.

BRIEF DESCRIPTION OF DRAWINGS

[Fig. 1] Fig. 1 is an exploded perspective view of a layered material used in the present invention.
[Fig. 2] Fig. 2 is an exploded perspective view of a carbon fiber preform used in the present invention.
[Fig. 3] Fig. 3 is a graph showing the relationship between thermal conductivity coefficient and flexural strength in present invention materials A1 through A5 and comparative materials Z1 through Z3.
[Fig. 4] Fig. 4 is a graph showing the relationship between interlaminar shear strength and thermal conductivity coefficient in present invention materials A1 through A5 and comparative materials Z1 through Z3.
[Fig. 5] Fig. 5 is an exploded perspective view illustrating a modified example of the layered material used in the present invention.
[Fig. 6] Fig. 6 is an exploded perspective view illustrating another modified example of the layered material used in the present invention.
[Fig. 7] Fig. 7 is an exploded perspective view illustrating yet another modified example of the layered material used in the present invention.
[Fig. 8] Fig. 8 is an exploded perspective view illustrating a modified example of a laminated material used in the present invention.
[Fig. 9] Fig. 9 is an exploded perspective view illustrating another modified example of the laminated material used in the present invention.

DESCRIPTION OF EMBODIMENTS

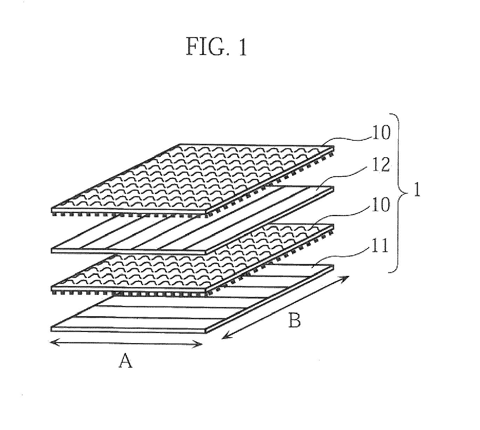

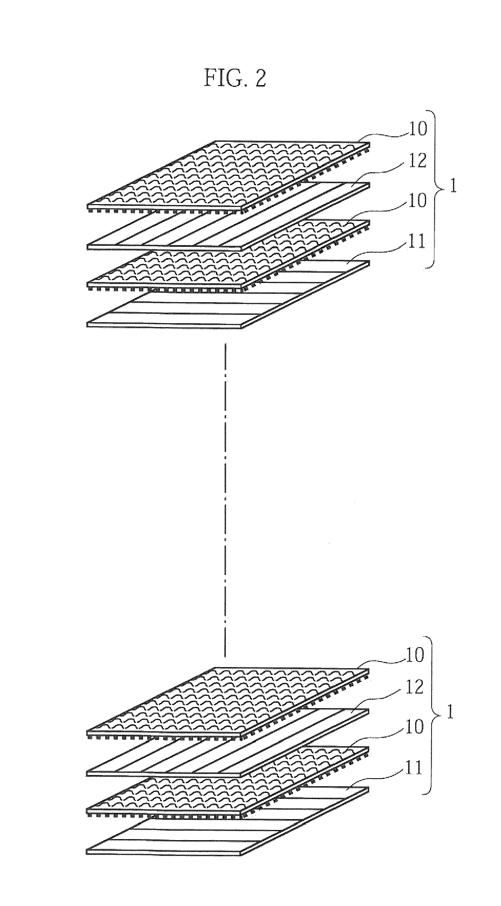

Hereinbelow, embodiments of the present invention will be described.
First, a PAN-based carbon fiber tow (single fiber diameter: about 7 μm, tensile strength: about 5 GPa, number of filaments: about 12000) was prepared. Thereafter, using nylon fiber, a plurality of the PAN-based carbon fiber tows were tied in a bundle-like form to thereby prepare carbon fiber unidirectional cloths. The carbon fiber unidirectional cloths have high flexural strength, and the PAN-based carbon fiber tows have a high Thermal conductivity coefficient in the extending direction. However, when the carbon fiber unidirectional cloths are laminated, the thermal conductivity of the carbon fiber unidirectional cloths that are adjacent to each other in the stacking direction becomes low.
At the same time, the same PAN-based carbon fibers as described above were cut into about 25 mm, and a felt (bulk density: about 0.1 g/cm$^3$) in which the carbon fibers were oriented randomly was prepared. A C/C composite in which this felt is impregnated with a matrix component is poor in, for example, flexural strength, but it shows high thermal conductivity in any direction.
Next, as illustrated in Fig. 1, two sheets of the just-described felt 10 and two sheets of the carbon fiber unidirectional cloths 11 and 12 were laminated in the following order from above downward: the felt 10, the carbon fiber unidirectional cloth 12, the felt 10, and the carbon fiber unidirectional cloth 11, to prepare a layered material 1. In this state, the extending direction of the carbon fibers in the one carbon fiber unidirectional cloth 11 is arranged to be at a right angle to the extending direction of the carbon fibers in the other carbon fiber unidirectional cloth 12. By disposing the carbon fiber unidirectional cloths 11 and 12 in this way, the flexural strength in both directions (the direction indicated by the arrow A and the direction indicated by the arrow B in Fig. 1) can be improved when fabricating the C/C composite material.
Next, as illustrated in Fig. 2, eight sheets of the layered material 1 were laminated, and thereafter needle punching was done by piercing barbed needles through all the layers, so that each of the layered was bonded together by entangling the carbon fibers of the felt. Thereby, a carbon fiber preform (a laminated material, hereinafter also referred to as "2.5D preform") having a thickness of about 10mm and a bulk density of about 0.6 g/cm$^3$ was prepared. It should be noted that, by the needle punching, holes each having a diameter of from 0.3 to 0.6 mm were provided at an average gap of about 2 mm. Thus, when the needle punching is done in this way, the carbon fibers of the felt are arranged so as to pierce through the carbon fiber unidirectional cloths in the stacking direction. As a result, the thermal conductivity in the stacking direction at room temperature can be improved. In addition, since each of the layers can be firmly bonded together, the flexural strength and the interlaminar shear strength of the C/C composite material can be enhanced.

Thereafter, the above-described 2.5D preform was CVI-processed. Specifically, under the conditions of a temperature of about 1000°C and a pressure of 10 Torr, the above-described 2.5D preform was retained for about 1000 hours in a mixed gas flow of hydrogen and propane (the volume ratio of hydrogen and propane being about 90 : 10), whereby a vapor-phase pyrolytic carbon, i.e., the matrix component, was deposited inside the 2.5D preform. Thereby, a C/C composite material in which the bulk density was increased to about 1.7 g/cm$^3$ was obtained. Lastly, the C/C composite material was heat-treated at about 2000°C. Note that the thickness of the C/C composite material was about 10 mm.

In the above-described embodiment, needles are allowed to pierce through all the layers by the needle punching because the carbon fiber preform has a relatively small thickness, about 10 mm. However, when using a carbon fiber preform having a large thickness such that the needles are difficult to pierce through all the layers, it is possible to repeat the step of performing the needle punching for a certain number of the layered materials that have been stacked, and further performing the needle punching for additional layered materials stacked thereon, so that the fibers of the felt can pierce through the carbon fiber preform in the stacking direction.

EXAMPLES

Example 1

A C/C composite material prepared in the manner described in the above-described embodiment was used for Example 1.

The C/C composite material fabricated in this manner is hereinafter referred to as a present invention material A1.

Example 2

A C/C composite material was fabricated in the same manner as described in Example 1 above, except that, in order to remove the nylon fiber in the 2.5D preform, a heat treatment was carried out under a nitrogen atmosphere at about 1000°C for about 1 hour, after the preparation of the 2.5D preform and before the CVI process.

The C/C composite material fabricated in this manner is hereinafter referred to as a present invention material A2.

Example 3

A C/C composite material was fabricated in the same manner as described in Example 1 above, except that the C/C composite material was further subjected to a heat treatment (at about 3000°C for about 24 hours) using an Acheson graphitization furnace.

The C/C composite material fabricated in this manner is hereinafter referred to as a present invention material A3.

Example 4

A C/C composite material was fabricated in the same manner as described in Example 2 above, except that the C/C composite material was further subjected to a heat treatment (at about 3000°C for about 24 hours) using an Acheson graphitization furnace.

The C/C composite material fabricated in this manner is hereinafter referred to as a present invention material A4.

Example 5

A C/C composite material was fabricated in the same manner as described in Example 1 above, except that, when forming a matrix in the 2.5D preform, pitch-based carbon was used in place of using the vapor-phase pyrolytic carbon.

Specifically, the same 2.5D preform as used in Example 1 was impregnated with a phenolic resin and was baked in a nitrogen atmosphere at about 1000°C for about 1 hour, to obtain a low density C/C composite material. Next, this low density C/C composite material was impregnated with coal-tar pitch and was baked at about 1000°C for about 1 hour, followed by repeating this process 5 times, whereby a C/C composite material in which the bulk density was increased to about 1.6 g/cm$^3$ was obtained. Lastly, this was heat-treated at about 2000°C for about 1 hour. It should be noted that since the process of impregnating the 2.5D preform with coal-tar pitch and then baking was repeated, the resulting matrix component was mainly composed of pitch-based carbon.

The C/C composite material fabricated in this manner is hereinafter referred to as a present invention material A5.

Comparative Example 1

First, plain weave cloths were prepared using tows each comprising about 12000 carbon fiber filaments and were impregnated with a phenolic resin. Then, the resulting cloths were laminated together and thereafter shaped using a heated platen press, to thereby obtain a laminated material (a low density C/C composite material, hereinafter also referred to as a "2D-cloth laminated material"). Next, this laminated material was baked in a nitrogen atmosphere at about 1000°C for about 1 hour. Thereafter, the resultant material was impregnated with petroleum pitch and was baked at about 1000°C for about 1 hour, followed by repeating this process 5 times, whereby a C/C composite material in which the bulk density was increased to about 1.6 g/cm$^3$ was obtained. Lastly, this was heat-treated at about 2000°C for about 1 hour.
The C/C composite material fabricated in this manner is hereinafter referred to as a comparative material Z1.

Comparative Example 2

A C/C composite material was fabricated in the same manner as described in Comparative Example 1 above, except that the C/C composite material was further subjected to a heat treatment (at about 3000°C for about 1 hour) using an Acheson graphitization furnace.
The C/C composite material fabricated in this manner is hereinafter referred to as a comparative material Z2.

Comparative Example 3

A laminated material was formed by laminating 40 sheets of the same layered material as used in Example 1. The resulting laminated material was not subjected to needle punching, but was sandwiched between two metal plates with a gap of about 10 mm. Thereafter, the laminated material was impregnated with a phenolic resin and then hardened, to obtain a laminated material having a thickness of about 10 mm. This laminated material was baked in a nitrogen atmosphere at about 1000°C for about 1 hour, to prepare a low density C/C composite. This was impregnated with coal-tar pitch and was baked at about 1000°C for about 1 hour, followed by repeating this process 5 times, whereby a C/C composite material in which the bulk density was increased to about 1.6 g/cm$^3$ was obtained. Lastly, this was heat-treated at about 2000°C for about 1 hour.
The C/C composite material fabricated in this manner is hereinafter referred to as a comparative material Z3.

Experiment

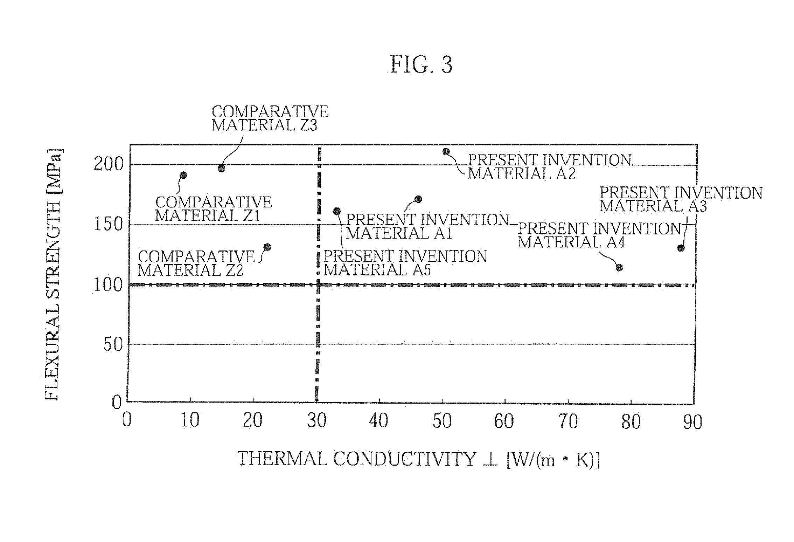

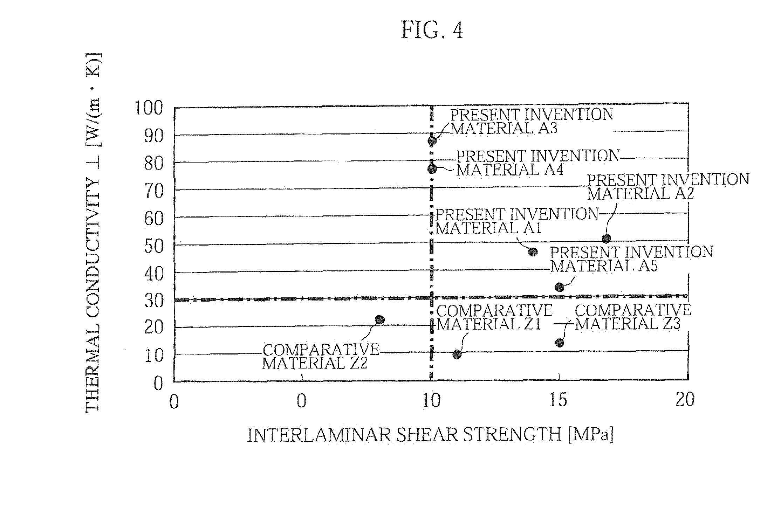

The bulk density, the flexural strength, the interlaminar shear strength (ILSS), the thermal conductivity coefficient in the stacking direction (hereinafter also represented as "thermal conductivity coefficient ⊥"), the thermal conductivity coefficient in the plane direction (the thermal conductivity coefficient in a direction perpendicular to the stacking direction, hereinafter also represented as "thermal conductivity coefficient //") were determined for the present invention materials A1 through A5 and the comparative materials Z1 through Z3 by the following methods. The results are shown in Table 1 below. The experiment was conducted at room temperature (23°C). Also, for these materials, the relationship between flexural strength and thermal conductivity coefficient ⊥, and the relationship between thermal conductivity coefficient ⊥ and interlaminar shear strength are shown in Figs. 3 and 4.

[Flexural strength]

Test pieces each having a rectangular parallelepiped shape with a length of 60 mm, a width of 10 mm, and a height of 3 mm (the height being in the stacking direction) were prepared, and a three-point bending test was conducted with a span distance of 40 mm and a crosshead speed of 0.5 mm/min. From the maximum load, the flexural strength was calculated using the following equation (1).

$$\text{Flexural strength} = 3PL/(2wh^2) \qquad \dots (1)$$

In equation (1), P is the load, L is the span distance, w is the width, and h is the height.

[ILSS (Interlaminar shear strength)]

Test pieces each having a rectangular parallelepiped shape with a length of 50 mm, a width of 10 mm, and a height of 6 mm (the height being in the stacking direction) were prepared, and a three-point bending test was conducted with a span distance of 30 mm and a crosshead speed of 0.5 mm/min. From the maximum load, the interlaminar shear strength was calculated using the following equation (2).

$$ILSS = 3P/(4wh) \qquad \ldots (2)$$

In equation (2), P is the load, w is the width, and h is the height.

[Thermal conductivity coefficient ⊥ and thermal conductivity coefficient //]

Test pieces each having a diameter of about 10 mm and a thickness of 3 mm (the measurement direction is in the thickness-wise direction) were prepared, and the thermal diffusivity was determined using laser flash photolysis. This was multiplied by the bulk density and the specific heat (the values for graphite was used. The source is, for example, JANAF Thermochemical Tables, 3rd edition) to thereby obtain the thermal conductivity coefficient.
[TABLE 1]

| Material | Bulk density [Mg/m³] | Flexural strength [MPa] | Interlaminar shear strength [MPa] | Thermal conductivity coefficient ⊥ [W/(m·K)] | Thermal conductivity coefficient //[W/(m·K)] |
|---|---|---|---|---|---|
| A1 | 1.73 | 170 | 14 | 46 | 92 |
| A2 | 1.72 | 208 | 17 | 50 | 100 |
| A3 | 1.70 | 128 | 10 | 87 | 153 |
| A4 | 1.71 | 110 | 10 | 77 | 170 |
| A5 | 1.65 | 160 | 15 | 33 | 80 |
| Z1 | 1.63 | 190 | 11 | 9 | 44 |
| Z2 | 1.69 | 130 | 8 | 22 | 152 |
| Z3 | 1.63 | 150 | 9 | 12 | 70 |

<Analysis of the results shown in Table 1>

It was observed that each of the present invention materials A1 and A2, in which the 2.5D preform was densified by a CVI process, exhibited a flexural strength of 100 MPa or higher, an interlaminar shear strength of 10 MPa or higher, and a thermal conductivity coefficient ⊥ of 30 W/(m·K) or higher.
Each of the present invention materials A3 and A4, which are different from the present invention materials A1 and A2 in the respect that they were subjected to a heat treatment at about 3000°C (graphitization process), showed a slightly lower flexural strength and a slightly lower interlaminar shear strength than the present invention materials A1 and A2 (note, however, that the flexural strength was 100 MPa or higher and the interlaminar shear strength was 10 MPa or higher). However, they were significantly better in both of the two thermal conductivities (thermal conductivity coefficient ⊥ and thermal conductivity coefficient //) than the present invention materials A1 and A2.
Moreover, the present invention material A5, which is different from the present invention material A1 in the respect that the matrix component was composed of pitch-based carbon, showed slightly lower in both of the two thermal conductivities than those of the present invention material A1 (note, however, that the thermal conductivity coefficient ⊥ was 30 W/(m·K) or higher) but exhibited substantially the same flexural strength and interlaminar shear strength as those of the present invention material A1.
Thus, it is demonstrated that all of the present invention materials A1 through A5 have a flexural strength of 100 MPa or higher, an interlaminar shear strength of 10 MPa or higher, and a thermal conductivity coefficient ⊥ of 30 W/(m·K) or higher.
In contrast, each of the comparative materials Z1 and Z2, which are different from the present invention material A1 in the respect that they used the 2D-cloth laminated material in place of the 2.5D preform, showed a flexural strength of 100 MPa or higher, but both of them showed a thermal conductivity coefficient ⊥ of less than 30 W/(m·K). Moreover, the comparative material Z2 also showed an interlaminar shear strength of less than 10 MPa.

Furthermore, the comparative material Z3, which is different from the present invention material A5 in the respect that needle punching was not performed when forming the preform, showed a flexural strength of 100 MPa or higher, but showed a thermal conductivity coefficient ⊥ of less than 30 W/(m·K) and an interlaminar shear strength of less than 10 MPa.

From the foregoing, it will be appreciated that it is desirable to employ the structure of the present invention, in order to ensure a flexural strength of 100 MPa or higher and a thermal conductivity of 30 W/(m·K) or higher in the stacking direction, or to ensure an interlaminar shear strength of 10 MPa or higher and a thermal conductivity of 30 W/(m·K) or higher in the stacking direction. This is also clear from Figs. 3 and 4.

Other Embodiments

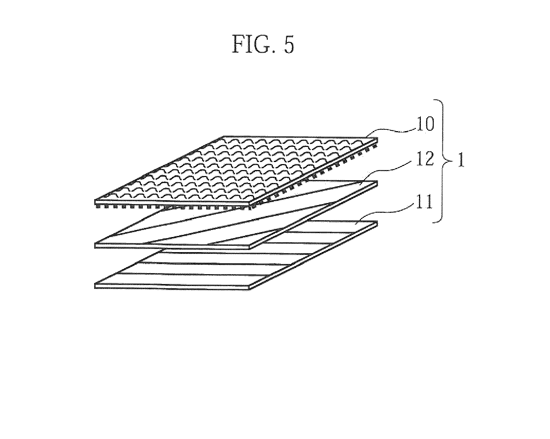

(1) The layered material 1 is not limited to the above-described structure. For example, as illustrated in Fig. 5, the extending direction of the carbon fibers in one carbon fiber unidirectional cloth 11 may not be at a right angle to the extending direction of the carbon fibers in the other carbon fiber unidirectional cloth 12.

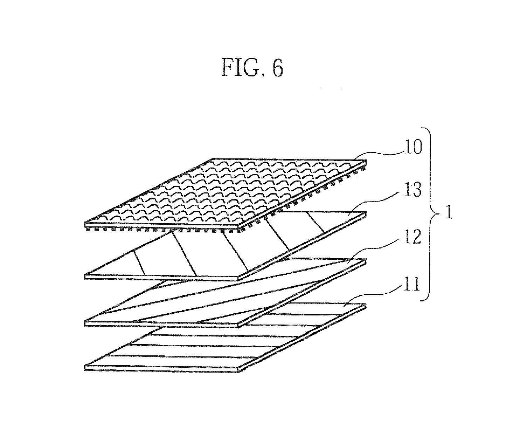

In addition, as illustrated in Fig. 6, it is possible that three sheets of the carbon fiber unidirectional cloths 11, 12, and 13 may be disposed and the extending directions of the carbon fibers of them may be made different from one another (in Fig. 6, the angle formed by the extending directions of the carbon fibers in the carbon fiber unidirectional cloths adjacent to each other is 60°).

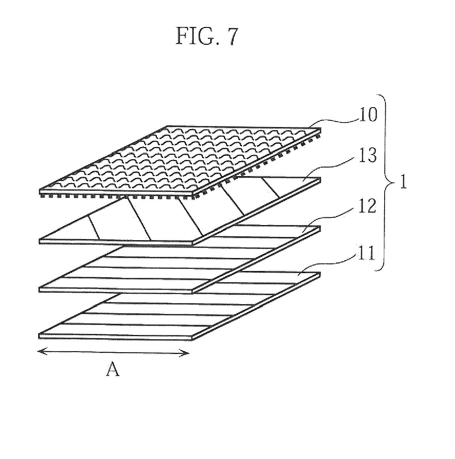

Furthermore, as illustrated in Fig. 7, in the case that the strength in one direction (for example, in the direction indicated by the arrow A in Fig. 7) is particularly necessary, it is possible that both the extending directions of the carbon fibers in the carbon fiber unidirectional cloths 11 and 12 may be arranged in the direction indicated by the arrow A and only that in the carbon fiber unidirectional cloth 13 may be arranged in a direction other than the direction indicated by the arrow A.

In addition, the number of the felt 10 in the layered material 1 is not limited to one as described above but may be two or more. Also, it is possible to employ an embodiment as shown in Fig. 1 in which the carbon fiber unidirectional cloths and the felts are laminated alternately one on the other.

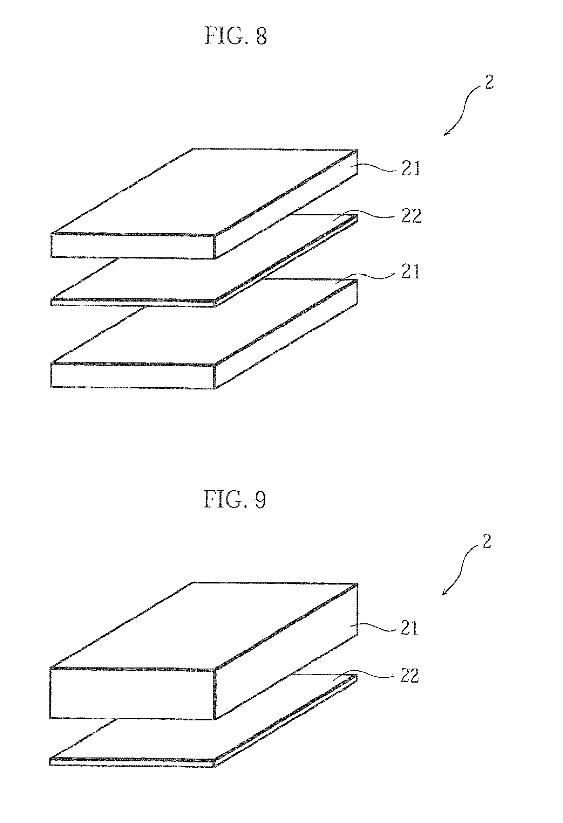

(2) The laminated material 2 is not limited to the one having the above-described structure. For example, it is also possible to employ the structure as illustrated in Fig. 8, in which a 2D fabric 22 is disposed between the laminated materials 21, 21 each made of the 2.5D preform. It is also possible to employ the structure as illustrated in Fig. 9, in which the 2D fabric 22 is disposed on one side of the laminated material 21 made of the 2.5D preform. Furthermore, the laminated material 2 may have any structure as long as it comprises at least two or more raw materials laminated on one another, the two or more raw materials selected from the group consisting of a layered material using continuous fiber, a layered material using chopped fiber, a 2D fabric, and a layered material using felt, and it has a flexural strength of 100 MPa or higher and a thermal conductivity of 30 W/(m·K) or higher in the stacking direction, or has an interlaminar shear strength of 10 MPa or higher and a thermal conductivity of 30 W/(m·K) or higher in the stacking direction.

(3) The diameter of the single fiber that makes up the carbon fiber tow and the carbon fiber felt is not limited to that described above, but may preferably be from about 5 to about 20 μm. If the diameter of the single fiber is less than 5 μm, the strength per each single fiber is too low, and the resulting material may have the problem of low strength. On the other hand, if the diameter of the single fiber exceeds 20 μm, the problem may arise that the fibers tend to break easily in handling and in needle punching.

Moreover, it is preferable that the carbon fiber length of the carbon fiber felt be from about 10 to about 100 mm. If the carbon fiber length is less than 10 mm, the problem may rise that the fibers are difficult to be entangled with each other and the shape of the felt as a fiber aggregate is difficult to be formed. On the other hand, if the carbon fiber length exceeds 100 mm, the problem may arise that the fibers are entangled with each other excessively and the production of the felt becomes difficult.

(4) The size of the holes formed by the needle punching is not limited to that described above, but it is preferable that the diameter be from about 0.1 mm to about 1.0 mm. If the diameter of the holes is less than 0.1 mm, the amount of the fibers of the felt that penetrate the cloths in the stacking direction will be so small that the thermal conductivity in a stacking direction at room temperature may not be improved sufficiently. On the other hand, if the diameter of the holes exceeds 1.0 mm, the area of the holes will be so large that the strength of the C/C composite material may be degraded.

INDUSTRIAL APPLICABILITY

The C/C composite material according to the present invention may be used for various applications including various materials for aerospace applications, for semiconductor and solar battery panel manufacturing applications, and for nuclear power applications, as well as metal heat-treatment jig applications.

REFERENCE SIGNS LIST

1 -- Layered material
10--Felt
11 -- Carbon fiber unidirectional cloth
12 -- Carbon fiber unidirectional cloth

**Claims**

1. A C/C composite material comprising a laminated material having at least two raw materials laminated on one another, the at least two raw materials each containing carbon fiber and selected from the group consisting of a layered material using continuous fiber, a layered material using chopped fiber, a 2D fabric, and a layered material using felt, the laminated material containing therein a matrix component, the C/C composite material having, at room temperature, a flexural strength of 100 MPa or higher, and a thermal conductivity of 30 W/(m·K) or higher in a stacking direction.

2. A C/C composite material comprising a laminated material having at least two raw materials laminated on one another, the at least two raw materials each containing carbon fiber and selected from the group consisting of a layered material using continuous fiber, a layered material using chopped fiber, a 2D fabric, and a layered material using felt, the laminated material containing therein a matrix component, the C/C composite material having, at room temperature, an interlaminar shear strength of 10 MPa or higher, and a thermal conductivity of 30 W/(m·K) or higher in a stacking direction.

3. The C/C composite material according to claim 1 or 2, wherein a portion or the entirety of the matrix component comprises vapor-phase pyrolytic carbon.

4. The C/C composite material according to claim 1 or 2, wherein a portion or the entirety of the matrix component comprises pitch-based carbon.

5. The C/C composite material according to any one of claims 1 through 4, wherein carbon fiber is arranged in a stacking direction of the laminated material.

6. A C/C composite material comprising: a laminated material comprising two or more layered materials laminated on one another, each of the layered materials containing carbon fiber and having a felt and two or more cloths each comprising continuous fiber, the laminated material containing therein a matrix component, wherein: the fibers of each of the cloths are extended in one direction within a plane perpendicular to a stacking direction; the fibers in at least one of the cloths in the layered materials are extended in a different direction from the extending direction in the other cloth(s); and a portion of the fibers of the felt pierces through the cloths in the stacking direction.

7. The C/C composite material according to claim 6, wherein the extending direction of the fibers in the at least one of the cloths and the extending direction of the fibers in the other cloth(s) are configured to be at right angles.

8. The C/C composite material according to claim 6 or 7, wherein a portion or the entirety of the matrix component comprises vapor-phase pyrolytic carbon.

9. The C/C composite material according to claim 6 or 7, wherein a portion or the entirety of the matrix component comprises pitch-based carbon.

10. A method of manufacturing a C/C composite material, comprising the steps of:

preparing a laminated material comprising at least two raw materials laminated on one another, the at least two raw materials selected from the group consisting of a layered material using continuous fiber, a layered material using chopped fiber, a 2D fabric, and a layered material using felt;
arranging carbon fibers in a stacking direction of the laminated material using needle punching; and
disposing a matrix component inside the laminated material.

FIG. 1

FIG. 2

FIG. 3

EP 2 554 526 A1

FIG. 4

FIG. 5

FIG. 6

FIG. 7

FIG. 8

FIG. 9

<table>
<tr><td colspan="2" style="text-align:center">**INTERNATIONAL SEARCH REPORT**</td><td colspan="2">International application No.<br>PCT/JP2011/057309</td></tr>
</table>

**A. CLASSIFICATION OF SUBJECT MATTER**
*C04B35/83*(2006.01)i

According to International Patent Classification (IPC) or to both national classification and IPC

**B. FIELDS SEARCHED**

Minimum documentation searched (classification system followed by classification symbols)
C04B35/83

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-116031 A (Hitachi Chemical Co., Ltd.), 26 April 1994 (26.04.1994), claims; paragraphs [0003], [0006]; table 1 (Family: none) | 1-10 |
| Y | JP 6-263537 A (Hitachi Chemical Co., Ltd.), 20 September 1994 (20.09.1994), claims; paragraphs [0003], [0007], [0020]; table 1 (Family: none) | 1-10 |
| Y | JP 2000-143360 A (Toyo Tanso Co., Ltd.), 23 May 2000 (23.05.2000), claims; paragraphs [0005], [0017] (Family: none) | 5-10 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 May, 2011 (09.05.11) | Date of mailing of the international search report<br>24 May, 2011 (24.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/057309

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2002-541002 A (Cytec Carbon Fibers L.L.C.), 03 December 2002 (03.12.2002), paragraphs [0002] to [0008] & US 6365257 B1  & EP 1181260 A & WO 2000/061518 A1  & DE 60006804 D & CA 2370089 A  & AT 255078 T & ES 2213575 T | 1-10 |
| A | JP 2005-272164 A (Matsushita Electric Industrial Co., Ltd.), 06 October 2005 (06.10.2005), claims; paragraph [0018] (Family: none) | 1-10 |
| A | JP 7-241945 A (Across Co., Ltd.), 19 September 1995 (19.09.1995), claims; paragraphs [0003], [0052]; fig. 14 (Family: none) | 1-10 |
| A | JP 7-300373 A (Nippon Carbon Co., Ltd.), 14 November 1995 (14.11.1995), claims; paragraphs [0005], [0016] (Family: none) | 1-10 |

Form PCT/ISA/210 (continuation of second sheet) (July 2009)

<table>
<tr><td>**INTERNATIONAL SEARCH REPORT**</td><td>International application No.<br>PCT/JP2011/057309</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

```
    The invention in claim 1 and the invention in claim 6 have such a common
technical feature as "C/C composite material containing a matrix component
in the interior of a laminate".  However, the afore-said technical feature
cannot be considered to be a special technical feature, since said technical
feature does not make a contribution over the prior art in the light of the
contents disclosed in the document 1.
                                            (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/057309 |

Continuation of Box No.III of continuation of first sheet(2)

Furthermore, there is no other same or corresponding special technical feature between the above-said inventions, and consequently, the inventions do not comply with the requirement of unity.

The inventions in claims as indicated below are relevant to main invention.

Claims 1, 3, 5

Document 1: JP 6-116031 A (Hitachi Chemical Co., Ltd.), 26 April 1994 (26.04.1994)

Form PCT/ISA/210 (extra sheet) (July 2009)

**EP 2 554 526 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H051993306168 A

- JP 2002255664 A